# EUROPÄISCHE PATENTANMELDUNG

(11) **EP 2 072 476 A1**
(43) Veröffentlichungstag der Anmeldung: **24.06.2009**
(21) Anmeldenummer: 07022487.8
(22) Anmeldetag: 20.11.2007
(51) Int. Cl.: C03C 11/00

(54) **Verfahren zur Herstellung eines porösen Werkstoffes**

(71) Anmelder: Burkhard, Dorothee, Dr., 76337 Waldbronn (DE)
(72) Erfinder: Burkhard, Dorothee, Dr., 76337 Waldbronn (DE)
(74) Vertreter: Grünecker, Kinkeldey, Stockmair & Schwanhäusser Anwaltssozietät

(57) **Zusammenfassung**

Die Erfindung betrifft ein Verfahren zur Herstellung eines Werkstoffs mit den Schritten: Bereitstellen eines silikatischen Glases in Form eines Granulats, wobei höchstens 80 % des Granulats Korngrößen von höchstens 125 µm aufweist, Bereitstellen von Natriumkarbonat in Form eines Granulats, Mischen des Glases und des Natriumkarbonats in einem Gewichtsprozent-Verhältnis von 1:1 ± 5 %, Einbringen der Mischung in einen Ofen bei einer vorherbestimmten Temperatur und für eine vorherbestimmte Zeit, so dass eine Silikatschmelze mit Poren gebildet wird, Entnehmen der Schmelze aus dem Ofen, so dass die Schmelze abgeschreckt wird.

## Beschreibung

Die Erfindung betrifft ein Verfahren zur Herstellung eines Werkstoffs und einen damit erhältlichen Werkstoff.

Bei herkömmlichen Verfahren zur Herstellung von Dämmstoffen, wie sie beispielsweise im Bausektor verwendet werden, werden vielfach silikatische Materialien eingesetzt. Bei der Herstellung von Wärmedämmstoffen (beispielsweise in Form von Dämmstoffplatten) auf der Basis von Perlit verarbeitet man Blähperlit, der entweder zu einer Platte gepresst oder durch Zusatz eines Bindemittels verfestigt wird. So wird beispielsweise in der EP 0 475 302 Natriumsilikat als Bindemittel offenbart.

Die Verwendung von Blähperlit erfordert einen vorangehenden industriellen Prozess, in dem Rohperlit (wasserhaltiges Obsidianglas) schockartig auf ca. 1000 °C erhitzt wird, wodurch Wasser entweicht und der Rohperlit zu sogenanntem Blähperlit gebläht wird. In anderen Verfahren werden Dämmstoffe durch Zusatz eines Blähmittels, wie beispielsweise Karbonat, hergestellt (siehe H. Schmidt, "Herstellung und Verwendung von Blähgranulat im Spiegel der Literatur", Sprechsaal, S. 867 - 882, 1970).

In der DE 10 2004 006 172 und der EP 1 561 739 wird die Herstellung eines Sinterkörpers mit wärmedämmenden und feuchteregulierenden Eigenschaften beschrieben. Bei dem darin dargestellten Verfahren wird insbesondere auf der Basis von Blähperlit und Natriumkarbonat ein Kleinzylinder von ca. 2 cm Durchmesser und 2 cm Höhe manuell hergestellt.

Die aus dem Stand der Technik bekannten Verfahren sind verhältnismäßig aufwändig. Es ist daher die Aufgabe der vorliegenden Erfindung, ein vereinfachtes Verfahren zur Herstellung eines Werkstoffs, insbesondere für Dämmstoffe, bereitzustellen. Diese Aufgabe wird gelöst durch den Gegenstand des Anspruchs 1.

Erfindungsgemäß wird ein Verfahren zur Herstellung eines Werkstoffs mit den Schritten bereitgestellt:
Bereitstellen eines silikatischen Glases in Form eines Granulats, wobei höchstens 80 % des Granulats Korngrößen von höchstens 125 µm aufweist,
Bereitstellen von Natriumkarbonat in Form eines Granulats,
Mischen des Glases und des Natriumkarbonats in einem Gewichtsprozentverhältnis von 1:1 ±5%,
Einbringen der Mischung in einen Ofen bei einer vorherbestimmten Temperatur und für eine vorherbestimmte Zeit, so dass eine Silikatschmelze mit Poren gebildet wird,
Entnehmen der Schmelze aus dem Ofen, so dass die Schmelze abgeschreckt wird.

Es hat sich überraschenderweise herausgestellt, dass bei einer Verwendung eines Granulats von silikatischem Glas, bei dem 80 % des Granulats Korngrößen von nicht größer als 125 µm aufweist, nach dem Mischen mit einem Natriumkarbonatgranulat eine Silikatschmelze erhalten werden kann, die nach dem Abschrecken einen Glaskörper ergibt, der insbesondere formstabil ist und gute Dämmeigenschaften aufweist.

Das Glas und das Natriumkarbonat werden in einem Verhältnis von etwa 1:1 gemischt, wobei Abweichungen von ± 5 %, insbesondere ± 3 %, noch zulässig sind.

Der Schritt des Bereitstellens eines silikatischen Glases kann ein Zerkleinern von silikatischem Glas umfassen, so dass das entsprechende Granulat erhalten wird. Der Schritt des Bereitstellens von Natriumkarbonat kann ein Zerkleinern oder Mahlen von Natriumkarbonat umfassen.

Das silikatische Glas kann ein Verhältnis von Anzahl nichtbrückenbildender Sauerstoffatome zu Anzahl Silikat-Tetraeder von 0,01 - 0,1 aufweisen. Eine derartige Silikatstruktur hat sich als besonders vorteilhaft für die Herstellung der Silikatschmelze herausgestellt.

Das silikatische Glas kann 70 - 78 Gew.-% SiO₂, 11 - 14 Gew.-% Al₂O₃, 1 - 2 Gew.-% Fe₂O₃, 0,05 - 0,15 Gew.-% MgO, 1 - 3 Gew.-% CaO, 3 - 4 Gew.-% Na₂O und 2 - 4 Gew.- % K₂O aufweisen. Es kann insbesondere eine Zusammensetzung von

| | Gew.-% |
|---|---|
| SiO₂ | 76,00 |
| TiO₂ | 0, 11 |
| Al₂O₃ | 12,92 |
| Fe₂O₃ | 1,13 |
| MnO | 0,05 |
| MgO | 0,11 |
| CaO | 2,05 |
| Na₂O | 3,68 |
| K₂O | 3,12 |
| P₂O₅ | 0,02 |

aufweisen. Das silikatische Glas kann insbesondere Rohperlit sein oder eine Zusammensetzung wie Rohperlit aufweisen. Es hat sich gezeigt, dass bereits die Verwendung von Rohperlit, d.h. ohne einen aufwändigen Blähschritt, in dem zuvor beschriebenen Verfahren eine sehr gut geeignete Silikatschmelze ergibt.

Das Granulat des silikatischen Glases kann 60 % an Partikeln mit einer Korngröße kleiner als 90 µm aufweisen. Insbesondere kann das Granulat 30 - 40 % an Partikeln mit einer Korngröße kleiner als 45 µm, 30 - 20 % an Partikeln mit einer Korngröße zwischen 45 und 90 µm und/oder 10 - 20 % an Partikeln mit einer Korngröße von 90 µm bis 125 µm aufweisen. Insbesondere kann die maximale Korngröße des Granulats kleiner oder gleich 0,5 mm sein. Bei derartigen Korngrößenverteilungen wird sichergestellt, dass der resultierende Werkstoff eine ausreichende Stabilität und Porosität aufweist.

Die Korngrößen des Natriumkarbonatgranulats können von 60 - 80 µm reichen.

Bei dem zuvor beschriebenen Verfahren kann die vorherbestimmte Temperatur 810 - 850 °C und/oder die vorherbestimmte Zeit 20 ± 5 Minuten betragen. Die vorherbestimmte Temperatur kann insbesondere 820 - 830 °C, vorzugsweise 820 °C, die vorherbestimmte Zeit insbesondere 20 Minuten betragen. Insbesondere mit diesen Parametern lässt sich eine gleichmäßige Porenverteilung im Glaskörper erzielen.

Der Schritt des Einbringens kann ein Einbringen der Mischung in eine Form und ein Einbringen der Form in den Ofen umfassen. Mittels einer derartigen Form lässt sich insbesondere die Herstellung gewünschter Formkörper, beispielsweise von Platten aus dem Werkstoff, ermöglichen. Die Innenseite der Form kann eine Antihaftbeschichtung aufweisen. Die Antihaftbeschichtung kann beispielsweise eine Graphitbeschichtung sein. Derartige Graphitbeschichtungen lassen sich beispielsweise mittels eines Graphitsprays aufbringen. Durch solche Antihaftbeschichtungen lässt sich ein Verbacken oder ein Verkleben bei der Herstellung der Silikatschmelze vermeiden

Der Schritt des Einbringens der Mischung in eine Form kann ein Beaufschlagen der in die Form eingebrachten Mischung mit einem Druck von 1 - 100 mbar, insbesondere 1 - 10 mbar, insbesondere 1 - 2 mbar, umfassen. Beispielsweise kann die Form eine nach oben offene Form sein, und der Schritt des Beaufschlagens ein Auflegen einer Platte, beispielsweise einer gelochten Metallplatte, auf die in die Form eingebrachte Mischung umfassen. Damit lassen sich geeignete Formkörper, beispielsweise Platten, in einfacher Weise herstellen.

Die zuvor beschriebenen Verfahren können ein Waschen der abgeschreckten Schmelze, insbesondere mit Wasser, umfassen. Auf diese Weise wird während des Verfahrens gebildetes Natrium-Metasilikat wenigstens teilweise entfernt; weiterhin kann nicht-reagiertes Karbonat wenigstens teilweise ausgewaschen und/oder zu Thermonatrit umgewandelt werden.

Bei dem zuvor beschriebenen Verfahren können die Schritte des Einbringens und des Entnehmens derart durchgeführt werden, dass der maximale Probendruchmesser der abgeschreckten Schmelze kleiner als 1,5 mm ist. Dies führt zu besonders guter Stabilität und geeigneten Dämmungseigenschaften des Werkstoffs.

Die Erfindung stellt weiterhin einen Werkstoff erhältlich nach einem der zuvor beschriebenen Verfahren bereit. Der Werkstoff kann insbesondere als Formkörper, beispielsweise in Form einer Platte, ausgebildet sein. Auf diese Weise kann eine Dämmstoffplatte, insbesondere eine feuchteregulierende Dämmstoffplatte, oder eine Wärmespeicherplatte erhalten werden.

Außerdem wird die Verwendung eines derartigen Werkstoffs zur Wärmedämmung, Wärmespeicherung, insbesondere Latentwärmespeicherung, Feuchtigkeitsspeicherung und/oder Feuchtigkeitsregulierung bereitgestellt. Insbesondere kann bei dem Werkstoff eine Adsorption von Wasser ohne externe Energiezufuhr stattfinden.

Weitere Merkmale und Eigenschaften werden nachfolgend anhand der beispielhaften Figuren beschrieben. Dabei zeigt:
- Fig. 1: ein Beispiel einer Korngrößenverteilung;
- Fig. 2: ein Beispiel des thermogravimetrischen Verhaltens;
- Fig. 3: ein Beispiel einer Porenverteilung;
- Fig. 4: Beispiele einer DVS-Analyse;
- Fig. 5: Beispiele für die prozentuale Massenzunahme; und
- Fig. 6: Beispiele für das Feuchteverhalten.

Im Folgenden wird beispielhaft die Herstellung einer Platte eines erfindungsgemäßen Werkstoffs beschrieben. In einem ersten Schritt wird ein silikatisches Glas bereitgestellt. Hierfür kann insbesondere Rohperlit gewählt werden, der die folgende Zusammensetzung zeigt:

| | Gew.-% | Δ Gew.-% |
|---|---|---|
| SiO₂ | 76,00 | ± 3 |
| TiO₂ | 0,11 | |
| Al₂O₃ | 12,92 | ± 2 |
| Fe₂O₃ | 1,13 | ± 0,2 |
| MnO | 0,05 | |
| MgO | 0,11 | |
| CaO | 2,05 | ± 0,5 |
| Na₂O | 3,68 | ± 0,5 |
| K₂O | 3,12 | ± 0,5 |
| P₂O₅ | 0,02 | |

Bei dieser Silikatstruktur beträgt das Verhältnis von nichtbrückenbildendem Sauerstoff zu Anzahl der Silikat-Tetraeder etwa 0,01. Ein anderes silikatisches Glas, das eine entsprechende Silikatstruktur oder eine entsprechende Zusammensetzung aufweist, ist jedoch gleichermaßen geeignet.

Die Bestimmung des genannten Verhältnis' erfolgt gemäß B. O. Mysen, et al., "Redox equlibria of iron in alkaline earth silicate melts: relationships between melt structure, oxygen fugacity, temperature and properties of iron-bearing silicate liquids", American Mineralogist, vol. 69, p. 834 - 847, 1984.

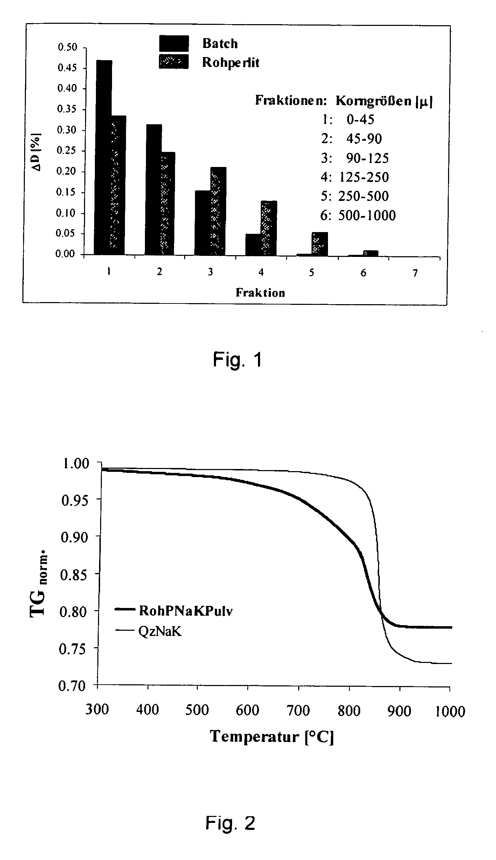

Das silikatische Glas wird in einem nächsten Schritt derart zerkleinert, dass eine Korngrößenverteilung, wie sie beispielhaft in Fig. 1 gezeigt ist, erhalten wird. Vorzugsweise liegt der Anteil von Korngrößen bis 45 µm bei 30 - 40 %, der Anteil von Korngrößen zwischen 45 und 90 µm bei 30 - 20 % und der Anteil zwischen 90 und 125 µm bei 10 - 20 %. Der restliche Anteil kann größere Korngrößen aufweisen; vorzugsweise überschreiten die Korngrößen jedoch nicht 0,5 mm. Aus der in Fig. 1 gezeigten Grafik ergibt sich, dass sich diese spezielle Korngrößenverteilung (in der Figur mit Batch bezeichnet) von der Korngrößenverteilung von Rohperlit (natürlichem Perlit) unterscheidet.

Wird der grobkörnige Anteil (Partikel mit Korngrößen größer als 125 µm) zu groß, so wird das Material bei der nachfolgenden Temperaturbehandlung unzureichend reagieren und der erhaltene Werkstoff eine geringe oder keine Stabilität aufweisen. Wenn der feinkörnige Anteil (Partikel mit einer Korngröße kleiner oder gleich 125 µm) zu groß wird, könnte die Reaktion zu vehement ablaufen, so dass ein zu kompakter Glaskörper mit geringer Porosität entsteht.

Die Korngrößenbestimmung wird mit Normprüfsieben nach DIN 4188 durchgeführt, mit Maschenweiten von 2000, 1000, 500, 250, 125, 90 und 45 µm. Verwendet wurde eine Analysensiebmaschine AS200 der Fa. Retsch. Der Siebaufbau mit der Probe wird für 10 bis 20 min gerüttelt und die Probe so gleichmäßig über die Siebflächen bewegt. Es werden ca. 10 g Probenmaterial für die Analyse gesiebt. Aus statistischen Gründen werden jeweils wenigstens fünf Siebanalysen durchgeführt.

In einem nächsten Schritt wird Natriumkarbonat (Na₂CO₃) zu einer Korngröße von ca. 60 - 80 µm gemahlen. Ein derartiger Mahlschritt ist deshalb häufig erforderlich, weil sich bei der Lagerung des Karbonats aufgrund seiner Hygroskopizität Agglomerate mit Größen von einigen Millimetern bilden können. Die beiden erhaltenen Granulate aus Rohperlit und Karbonat werden in einem Gewichtsprozentverhältnis von etwa 1:1 vermischt (Batchherstellung). Eine Abweichung dieses Verhältnisses um 5 %, vorzugsweise nur um 3 %, ist möglich. Größere Abweichungen können die Stabilität des Endprodukts negativ beeinflussen.

Der Batch bzw. die Mischung werden dann in eine geeignete Form gefüllt. Bei dieser Form kann es sich beispielsweise um eine Quaderform mit den Innenabmessungen von 6 cm x 18 cm x 4 cm handeln, die nach oben offen ist. Eine vorherige Behandlung der Form, beispielsweise durch Beschichtung mit einem Graphitspray, kann ein Verbacken oder Kleben in den nachfolgenden Verfahrensschritten verhindern.

Anschließend wird eine gelochte Platte, beispielsweise aus Metall, auf das eingefüllte Material gelegt. Bei den oben genannten Abmessungen kann diese beispielsweise so ausgebildet sein, dass sie eine geringe Druckbeaufschlagung von etwa 1.3 mbar erzielt. Der erhöhte Druck kann mit einer längeren Verweildauer im Ofen (beispielsweise um 2 Minuten) kompensiert werden.

Danach wird die Form in einen Ofen mit einer Temperatur von 820 ± 5 °C eingebracht. Bei den obengenannten Abmessungen und der Auflage der beschriebenen Platte beträgt die Verweildauer 20 Minuten. Diese Zeit hängt allerdings von der Thermik des Ofens und der Ofenleistung ab, d.h. wie schnell der Ofen nach Einbringen der Probe wieder die SollTemperatur erreicht hat.

Im Ofen bildet sich damit in der Form eine Silikatschmelze mit Poren bzw. einer Porenstruktur aufgrund der Entgasung von CO₂.

Nach Ablauf der Verweildauer wird die Schmelze zu einem Glaskörper abgeschreckt, indem sie aus dem Ofen entnommen wird. Die zuvor angegebenen Prozessparameter führen zu einer gleichmäßigen Porenverteilung im Glaskörper, wobei der größte Porendurchmesser kleiner als 1,5 mm ist.

Anschließend wird die erhaltene Platte in Wasser gewaschen. Hierbei wird ein während des Prozesses gebildetes Mineral (Natrium-Metasilikat) teilweise entfernt. Weiterhin wird auch nicht-reagiertes Karbonat teilweise ausgewaschen bzw. zu Thermonatrit (Natriumkarbonat-Monohydrat, Na₂CO₃ H₂O) umgewandelt. Thermonatrit ist für das Feuchteverhalten in der Platte verantwortlich.

Zu Beginn der chemischen Reaktion zwischen Perlit und Natriumkarbonat im Ofen entsteht zunächst ein Sinterkörper erheblich kleineren Volumens als die ursprüngliche Batchfüllung. Mit zunehmendem Verbleib im Ofen beginnt die Schmelzbildung und eine simultane Entgasung von CO₂. Bei der richtigen Verweildauer im Ofen findet eine partielle Entgasung statt und führt zum Blähen der Schmelze. Daher wird die chemische Reaktion unterbrochen, bevor ein thermodynamisches Gleichgewicht erreicht ist.

Bei zu kurzem Verbleib im Ofen ist die Reaktion zu wenig fortgeschritten. Ein Sinterprozess und die Volumenabnahme findet gegebenenfalls schon statt, allerdings ohne das Blähen der Schmelze, so dass anschließend ein Sinterkörper mit geringer Porosität erhalten wird. Bei zu langem Verbleib im Ofen führt die Entgasung zum Wachstum der Gasblasen; insbesondere wachsen größere Blasen auf Kosten kleinerer Blasen. Diese können dann einen Durchmesser in der Größenordnung von Zentimetern erreichen und unregelmäßig über den Werkstoff verteilt sein

Bei zu geringen Temperaturen (beispielsweise wesentlich geringer als 820 °C bei den obengenannten Bedingungen) sinkt der Grad der Reaktion und ein wachsender Anteil von nicht-reagiertem Perlit und Karbonat führt zur mechanischen Instabilität des Werkstoffes. Eine zu hohe Temperatur, solange sie unterhalb von 850 °C liegt (Schmelzpunkt von Natriumkarbonat) führt zu kaum verschlechterten Ergebnissen solange sie durch kürzere Verweildauern kompensiert werden. Wird bei höheren Temperaturen, durch die die Viskosität der Schmelze erniedrigt wird, die Verweildauer nicht verringert, entweicht das CO₂ und die Porosität nimmt ab. Die abgekühlte Schmelze bildet, je nach Porosität, einen mehr oder weniger kompakten Glasblock.

Wird die Mischung in der Form mit einem leichten Druck beaufschlagt, erfordert dies eine längere Verweildauer im Ofen. Wird der Druck signifikant erhöht sollte die dadurch reduzierte Entgasung durch höhere Temperaturen kompensiert werden.

Die Wahl der geeigneten Zusammensetzung, wie sie beispielsweise bei Rohperlit gegeben ist, wirkt sich insbesondere auf die Stabilität des neuen Werkstoffes aus. So zeigen Vergleichsuntersuchungen mit Bimsstein (statt Rohperlit) vom Neuwieder Becken nach einer Behandlung bei 800 °C (optimiert) und 20 Minuten Verbleib im Ofen einen Formkörper, der im Rasterelektronenmikroskop ebenfalls Karbonate und Metasilikate aufweist. Der Werkstoff ist jedoch sandbraun verfärbt und weist eine nur geringe Stabilität auf - er lässt sich von Hand zerdrücken. Ebenfalls keine Stabilität des Formkörpers lässt sich erzielen, wenn man Quarzsand verwendet. Die Wahl eines anderen Karbonats, beispielsweise von Kaliumkarbonat erfordert die Anwendung höherer Temperaturen und erlaubt keine kontrollierbare Entgasung. Der entstehende Werkstoff ist stark gesintert und weist eine erhebliche Volumenabnahme gegenüber dem ursprünglichen Füllvolumen auf. Weiterhin ist der Werkstoff stark hygroskopisch. Die Verwendung von Kalziumsilikat würde erheblich höhere Temperaturen (Energieaufwand) erfordern.

Das thermogravimetrische Verhalten (TG) ist in Fig. 2 beispielhaft illustriert. Gezeigt ist das Verhalten von Rohperlit-Natriumkarbonat- und Quarz-Natriumkarbonat-Batches. Der Reaktionsprozess beginnt bei relativ niedrigen Temperaturen ab etwa 300 °C. Hier wird ein erkennbarer Gewichtsverlust durch Entgasung von CO₂ anhand von Thermogravimetrie verzeichnet. Wenn die Entgasung stattfindet, muss Natrium aus dem Karbonat freigesetzt werden. Die treibende Kraft für diese Karbonatzersetzung ist vermutlich das chemische Potential von Natrium zu dem natriumarmen Perlit. wodurch Natrium in das Perlitglas ein dringt. Diese Reaktion beginnt entlang der Korngrenzen. Durch das Eindringen von Natrium verändert das ursprünglich SiO₂-reiche Glas seine Zusammensetzung und erfährt dadurch eine Schmelzpunkterniedrigung. Dies führt zum Aufschmelzen des neuen Glases. Die Entgasung (Gewichtsverlust) nimmt ab einer Temperatur von ca. 650 °C zu; bei dieser Temperatur kann auch die erste Bildung von Natrium-Metasilikat röntgenografisch nachgewiesen werden.

Die Natriummigration in das Perlitglas kann beispielsweise bis zu einer Eindringtiefe von ca. 20 - 45 µm erfolgen, wie Temperexperimente bei 800 °C und anschließende Untersuchungen mit dem Rasterelektronenmikroskop belegen.

Um zu verhindern, dass im System verbleibendes Metasilikat und Karbonat zu einer Beeinträchtigung der Silikatglasstruktur führen, wird die Platte direkt nach dem Entfernen aus dem Ofen gewässert. Beim Wässern wird das Metasilikat und Karbonat teilweise entfernt, wobei zurückbleibendes Karbonat mit Wasser zu Thermonatrit umgewandelt wird. Thermonatrit und Metasilikat liegen stabil nebeneinander vor.

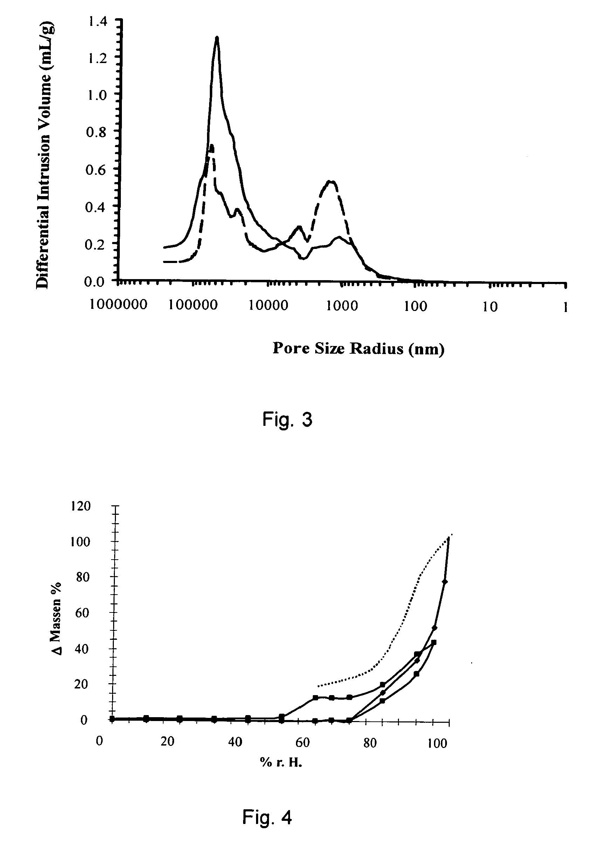

Fig. 3 illustriert die Porengrößenverteilung in Abhängigkeit vom Porenradius für zwei Beispiele eines Werkstoffes. Bei den untersuchten Proben des Werkstoffs liegen die meisten Poren im Radienbereich von 100000 bis 1000 mm, d.h. es liegen Makroporen (Porenweiten von 10° bis 10⁻² mm) und Kapillarporen (Porenweiten von 10⁻⁵ bis 10⁻² mm) vor, aber praktisch keine Poren im Mikroporenbereich (Porenbreiten von 10⁻⁶ bis 10⁻⁵ mm).

Die Porengrößenverteilung wird mittels Quecksilberdruckporosimetrie nach DIN 66133 bestimmt. Das Verfahren beruht auf der Messung des in einen porösen Feststoff eingepressten Quecksilbervolumens in Abhängigkeit des angewandten Drucks. Es wird nur die offene Porosität erfasst.

Die spezifische Oberfläche nach BET liegt beispielsweise bei 4,3 m²/g und liegt somit im Bereich von silikatischem Glas. Minerale, die auf der Glasoberfläche im Zuge der Synthese entstehen, werden nicht als spezifische Oberfläche erfasst.

In Fig. 4 sind zwei Beispiele einer DVS-Analyse des Werkstoffs illustriert. Die differnziellen Massenprozente beziehen sich auf die Gesamteinwaage des Werkstoffs. Bei der dynamischen Wasserdampf-Sorption (DVS) wird die zu untersuchende Probe in eine Ultra-Mikrowaage eingesetzt. Die Probe wird kontinuierlich von einem mit Wasser beladenen Trägergas (Stickstoff) umströmt. Dadurch wird ein guter Stofftransport zur Probe gewährleistet, und Diffusionslimitierungen werden reduziert. Sorptionsisotherme werden bei einer Umgebungstemperatur von 25 °C mit einem Gerät DVS 1 der Firma Porotec aufgezeichnet. Aufgrund der hohen Feuchtigkeitsaufnahme der Proben ist die Probenmasse zur zeitlichen Eingrenzung in einem Bereich von 10 - 20 mg gewählt. Die Umgebungsfeuchten wurden nach DIN EN ISO 12571 angesteuert.

Der Werkstoff zeigt ab einer relativen Feuchtigkeit (r.F.) von 70 % ein hohes Feuchtespeichervermögen (steiler Anstieg der Adsorptionsisothermen). Adsorptions- und Desorptionsisothermen zeigen eine Hysterese. Bei der Desorption im Bereich von 95 bis 80 % r.F. gibt der Werkstoff einen großen Teil der gespeicherten Feuchte wieder ab. Dagegen wird bei einer Lagerung der Probe in einer Umgebungsfeuchte von 80 bis 65 % r.F. nur in geringem Maße Feuchte an die Umgebung abgegeben, während sich dann aber im Bereich von 65 bis 50 % der Feuchtegehalt der Proben wieder drastisch verringert.

Das Feuchteverhalten des Werkstoffes hat zur Folge, dass bei einer hohen relativen Umgebungsfeuchte sehr viel Feuchte im Werkstoff gespeichert werden kann, die dann bei Abnahme der Umgebungsfeuchte abgegeben wird, so dass besonders bei Umgebungsfeuchten im Bereich der Behaglichkeit (40 - 70 % r.F.) eine regulierende Wirkung des Werkstoffs hinsichtlich der relativen Umgebungsfeuchte eintritt.

Ohne an eine bestimmte Hypothese gebunden zu sein wird vermutet, dass das Feuchtespeichervermögen des Werkstoffes seine Ursache in der Hygroskopizität von Thermonatrit hat. Dieses Feuchtespeichervermögen übersteigt das von Referenzmaterialien, wie Kalziumsilikatplatten, um ein Vielfaches, wenn man den volumenbezogenen Wassergehalt der Sorptionsisotherme bei 96 % r.F. mittels DVS-Methode zugrundelegt.

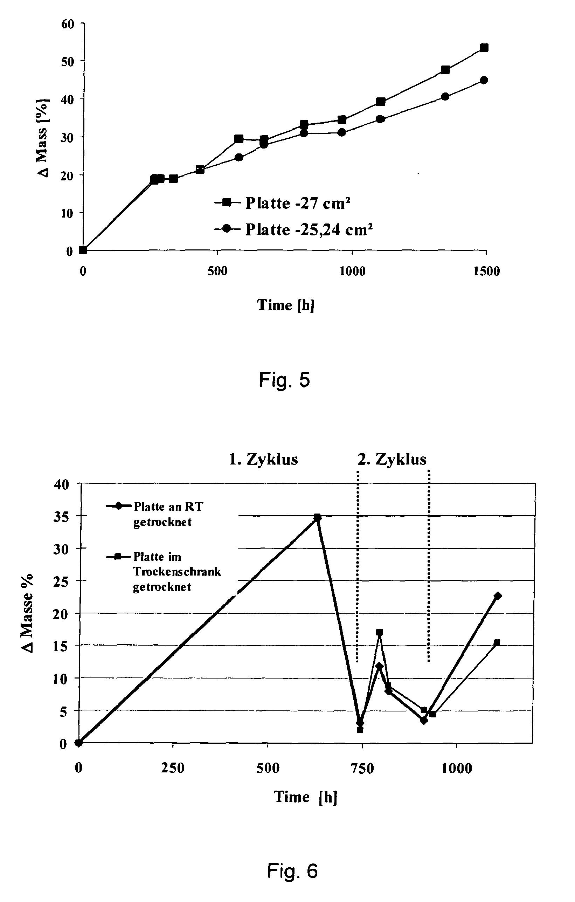

Die prozentuale Massenzunahme mit der Zeit wurde für zwei Proben beispielhaft bei 98 % r.F. in einer Klimabox bestimmt (siehe Fig. 5). Proben des Werkstoffes wurden dort bei 20 °C gelagert. Die Proben haben jeweils leicht unterschiedliche Oberflächen. Wie man aus Fig. 5 erkennen kann, ist auch nach 1500 Stunden keine Sättigung erreicht.

Ein Beispiel für das zeitabhängige Verhalten des Werkstoffs bei wechselnder Feuchtigkeit (feuchter und trockener Zustand) wird in Fig. 6 illustriert. Hierfür wurden aus einer Platte des Werkstoffs zwei quadratische Stücke herausgeschnitten und Zyklen gefahren, von denen zwei in der Figur gezeigt sind.

Im ersten Zyklus wurden die Proben für eine gewisse Zeit in eine Klimabox (98 % r.F. bei 11 °C) gebracht, dann die Massenzunahme der feuchten Proben bestimmt, und dann eine Probe an der Luft getrocknet und die andere im Trockenschrank bei 95 °C. Nach 2 Tagen wurde dann die Massenänderung der beiden Proben bestimmt, und sie wurden danach wieder in die Klimabox gebracht.

Im zweiten Zyklus wurde der Vorgang des ersten Zyklus wiederholt, wobei jetzt die zweite Probe bei 50 °C im Trockenschrank getrocknet wurde. Nach einigen Tagen wurde dann die Massenänderung der Proben bestimmt, und sie wurden wieder in die Klimabox gebracht.

Nach dem ersten Zyklus beobachtet man eine Massenzunahme von ca. 35 %, nach der Trocknung an Luft oder im Trockenschrank eine Massenabnahme bis zu ca. 2 %. Nach dem zweiten Zyklus findet eine schnelle Gewichtszunahme beider Proben in kurzer Zeit statt; nach der Trocknung an Luft oder im Trockenschrank beträgt die Massenänderung ca. 5 %.

Wie sich aus entsprechenden Röntgendiffraktogrammen ergibt, enthält die Ausgangsprobe Thermonatrit und etwas Natrium-Metasilikat (Na₂SiO₃). Nach der Lagerung in der Klimabox und Trocknung an Luft wird kein Metasilikat mehr beobachtet. Nach der Trocknung bei 95 °C ist Thermonatrit zu Natriumkarbonat umgewandelt. Nach abermaliger Lagerung in der Klimabox ist wiederum und ausschließlich Thermonatrit vorhanden. Nach weiterer Lagerung an trockener Luft oder im Trockenschrank bei 50 °C bleibt Thermonatrit vorhanden.

Der Umwandlungsprozess Karbonat-Thermonatrit ist reversibel. Für den Werkstoff bedeutet dies, dass es keine zyklische Begrenzungen für die Feuchteaufnahme und -abgabe gibt.

In der nachfolgenden Tabelle sind die bauphysikalischen Eigenschaften eines Beispiels eines erhaltenen Werkstoffs gezeigt.

| **Kenngröße** | **Ergebnis** |
|---|---|
| Anwendungstyp nach DINV4108-10 | Innendämmung der Wand bzw. der Decke unter-seitig (WI /DI) |
| Bestimmung der Porenverteilung nach DIN 66133 | hohe Porenanteile im Makroporenbereich, und im Kapillarporenbereich |
| Bestimmung der Wasseraufnahme bei langzeitigem Eintauchen - massebezo-gener Wasseraufnahmegrad nach DIN EN 12087 | > 80 % |
| Bestimmung der Rohdichte nach DIN EN 1602 | 0,5 - 0,8 g/cm³ |
| Bestimmung der Reindichte mit dem Heliumpyknometer | 2,2210 g/cm³ |
| Bestimmung der Gesamtporosität | ca. 63 % |
| Bestimmung der Spezifischen Oberfläche nach BET | 4,3 m²/g |
| Bestimmung des Wasseraufnahmekoeffizienten nach DIN EN ISO 15148 | > 100 kg/(m²h^{0,5}) |
| Bestimmung der hygroskopischen Sorptionseigenschaften nach DIN EN ISO 12571 | Bei Bestimmung nach Norm erhöhen sich die Werte im Bereich höherer Feuchten um mindestens das Doppelte gegenüber DVS |
| DVS | Massenänderung bei 50 % r.H. = 0,673 M.-% und bei 95 % r.H. = 45 M.-% |
| Druckfestigkeit | 1-2 N/mm² |
| Wärmeleitfähigkeit nach DIN 52 612 | ca. 86 mW/m·K |

Für die wie oben beschriebenen Werkstoffe gibt es eine Vielzahl von Anwendungsmöglichkeiten. Die Verwendung von silikatischem Material und ausschließlich anorganischem Zusatz bei der Herstellung garantiert Nichtbrennbarkeit und schließt Toxizität aus. Die außergewöhnlichen Sorptionseigenschaften des Werkstoffs ermöglichen eine kostensparende und klimaschonende Regulierung der Umgebungsfeuchte und des Raumklimas im Innenbau. Eine weitere Möglichkeit der Anwendung liegt im Nutzen der latenten Wärme; absorbierte Feuchte würde im Brandschutz von großer Bedeutung sein, da es im Brandfall zu einer Verzögerung des Temperaturanstiegs kommen würde. Somit kann der Werkstoff beispielsweise als Brandschutz im Tunnelbau eingesetzt werden.

Als weitere Alternative lässt sich der Werkstoff in der Kältetechnik einbringen oder als Latentwärmespeicher einsetzen. Bei dem vorliegenden Werkstoff findet die Adsorption von Wasser ohne externe Energiezufuhr statt, was einen erheblichen Kostenvorteil bedeutet. Die Adsorption findet als Chemisorption statt, bei der mehr als 100 kJ/mol freiwerden. Legt man diesen Minimalwert zugrunde, errechnet sich für den neuen Werkstoff mit einer konservativen Dichte von 600 g/cm³ eine Energiedichte von über 500 kWh/m³. Im Vergleich: Für Zeolithe wird eine Energiedichte von 200-500 kWh/m³ angegeben, für Silicagel 200-300 kWh/m³, derweil die Verdampfungswärme von Wasser bei 60 kWh/m³ liegt.

## Patentansprüche

1. Verfahren zur Herstellung eines Werkstoffs mit den Schritten:
Bereitstellen eines silikatischen Glases in Form eines Granulats, wobei höchstens 80 % des Granulats Korngrößen von höchstens 125 µm aufweist,
Bereitstellen von Natriumkarbonat in Form eines Granulats,
Mischen des Glases und des Natriumkarbonats in einem Gewichtsprozent-Verhältnis von 1:1 ± 5 %,
Einbringen der Mischung in einen Ofen bei einer vorherbestimmten Temperatur und für eine vorherbestimmte Zeit, so dass eine Silikatschmelze mit Poren gebildet wird,
Entnehmen der Schmelze aus dem Ofen, so dass die Schmelze abgeschreckt wird.

2. Verfahren nach Anspruch 1, wobei das silikatische Glas ein Verhältnis von Anzahl nichtbrückenbildender Sauerstoffatome zu Anzahl Silikat-Tetraeder von 0,01 - 0,1 aufweist.

3. Verfahren nach Anspruch 1 oder 2, wobei das silikatische Glas Rohperlit ist oder eine Zusammensetzung wie Rohperlit aufweist.

4. Verfahren nach einem der vorangegangenen Ansprüche, wobei das Granulat des silikatischen Glases 60 % an Partikeln mit einer Korngröße kleiner als 90 µm, insbesondere 30 - 40 % an Partikeln mit einer Korngröße kleiner als 45 µm, 30 - 20 % an Partikeln mit einer Korngröße zwischen 45 und 90 µm und/oder 10 - 20 % an Partikeln mit einer Korngröße von 90 µm bis 125 µm, aufweist.

5. Verfahren nach einem der vorangegangenen Ansprüche, wobei die Korngrößen des Natriumkarbonatgranulats von 60 bis 80 µm reichen.

6. Verfahren nach einem der vorangegangenen Ansprüche, wobei die vorherbestimmte Temperatur 810 - 850 °C und/oder die vorherbestimmte Zeit 20 ± 5 Minuten beträgt.

7. Verfahren nach einem der vorangegangenen Ansprüche, wobei der Schritt des Einbringens ein Einbringen der Mischung in eine Form und ein Einbringen der Form in den Ofen umfasst.

8. Verfahren nach einem der vorangegangenen Ansprüche, umfassend ein Waschen der abgeschreckten Schmelze, insbesondere mit Wasser.

9. Verfahren nach einem der vorangegangenen Ansprüche, wobei die Schritte des Einbringens und des Entnehmens derart durchgeführt werden, dass der maximale Porendurchmesser der abgeschreckten Schmelze kleiner als 1,5 mm ist.

10. Werkstoff erhältlich nach einem Verfahren gemäß einer der vorangegangenen Ansprüche.

11. Verwendung eines Werkstoffs nach Anspruch 10 zur Wärmedämmung, Wärmespeicherung, Feuchtigkeitsspeicherung und/oder Feuchtigkeitsregulierung.

## Geänderte Patentansprüche

### Geänderte Patentansprüche gemäss Regel 137(2) EPÜ.

**1.** Verfahren zur Herstellung eines Werkstoffs mit den Schritten:
Bereitstellen eines silikatischen Glases in Form eines Granulats, wobei höchstens 80 % des Granulats Korngrößen von höchstens 125 µm aufweist und wobei das Granulat 60 % an Partikeln mit einer Korngröße kleiner als 90 µm aufweist,
Bereitstellen von Natriumkarbonat in Form eines Granulats,
Mischen des Glases und des Natriumkarbonats in einem Gewichtsprozent-Verhältnis von 1:1 ± 5 %,
Einbringen der Mischung in einen Ofen bei einer vorherbestimmten Temperatur und für eine vorherbestimmte Zeit, so dass eine Silikatschmelze mit Poren gebildet wird,
Entnehmen der Schmelze aus dem Ofen, so dass die Schmelze abgeschreckt wird.

**2.** Verfahren nach Anspruch 1, wobei das silikatische Glas ein Verhältnis von Anzahl nichtbrückenbildender Sauerstoffatome zu Anzahl Silikat-Tetraeder von 0,01 - 0,1 aufweist.

**3.** Verfahren nach Anspruch 1 oder 2, wobei das silikatische Glas Rohperlit ist oder eine Zusammensetzung wie Rohperlit aufweist.

**4.** Verfahren nach einem der vorangegangenen Ansprüche, wobei das Granulat des silikatischen Glases 30 - 40 % an Partikeln mit einer Korngröße kleiner als 45 µm, 30 - 20 % an Partikeln mit einer Korngröße zwischen 45 und 90 µm und/oder 10 - 20 % an Partikeln mit einer Korngröße von 90 µm bis 125 µm, aufweist.

**5.** Verfahren nach einem der vorangegangenen Ansprüche, wobei die Korngrößen des Natriumkarbonatgranulats von 60 bis 80 µm reichen.

**6.** Verfahren nach einem der vorangegangenen Ansprüche, wobei die vorherbestimmte Temperatur 810 - 850 °C und/oder die vorherbestimmte Zeit 20 ± 5 Minuten beträgt.

**7.** Verfahren nach einem der vorangegangenen Ansprüche, wobei der Schritt des Einbringens ein Einbringen der Mischung in eine Form und ein Einbringen der Form in den Ofen umfasst.

**8.** Verfahren nach einem der vorangegangenen Ansprüche, umfassend ein Waschen der abgeschreckten Schmelze, insbesondere mit Wasser.

**9.** Verfahren nach einem der vorangegangenen Ansprüche, wobei die Schritte des Einbringens und des Entnehmens derart durchgeführt werden, dass der maximale Porendurchmesser der abgeschreckten Schmelze kleiner als 1,5 mm ist.

**10.** Werkstoff erhältlich nach einem Verfahren gemäß einer der vorangegangenen Ansprüche.

**11.** Verwendung eines Werkstoffs nach Anspruch 10 zur Wärmedämmung, Wärmespeicherung, Feuchtigkeitsspeicherung und/oder Feuchtigkeitsregulierung.
